# EUROPEAN PATENT APPLICATION

(11) **EP 2 876 602 A1**
(43) Date of publication of application: **27.05.2015**
(21) Application number: 13194382.1
(22) Date of filing: 26.11.2013
(51) Int. Cl.: G06T 7/00

(54) **Method and device for analysing nanostructure array images**

(71) Applicant: University College Cork, National University of Ireland Cork, Cork (IE); Fundació Privada Institut Català de Nanotecnologia, 08193 Bellaterra (Barcelona) (ES); Institució Catalana de Recerca i Estudis Avançats, 08010 Barcelona (ES)
(72) Inventor: Sotomayor Torres, Clivia Marfa, 42553 VELBERT (DE); Delgado Simao, Claudia Custodia, 08012 BARCELONA (ES); Kunshin, Worawut, 10520 BANGKOK (TH); Morris, Michael Anthony, CORK (IE); Tuchapsky, Dmitri, CORK (IE); Amann, Andreas, CORK (IE)
(74) Representative: ZBM Patents - Zea, Barlocci & Markvardsen

(57) **Abstract**

Methods and devices for analyzing nanostructure array images are disclosed. Images of arrays of nanostructures are converted to representations in a coordinate system and the defectivity of said array of nanostructures is measured. Aspects of the methods include converting the image of the array of nanostructures to a representation in a coordinate system. Said conversion may comprise identifying a plurality of line structures in the image and generating a network of coordinates for each line structure. Then a reference defectivity metric may be compared with an identified metric related to the nanostructure during said conversion of the image in said coordinate system. When the identified metric does not satisfy a condition of the reference defectivity metric, then the array of nanostructures may be considered defective.

## Description

The present disclosure relates to nanostructure metrology and more specifically to methods and devices for analysing nanostructure array images for topology, position and defect metrology.

### BACKGROUND ART

To meet the increasing demand for smaller, faster microfabricated devices, a continued decrease in the feature size of device components is required. The semiconductor industry, however, is rapidly approaching a hard stop in the continued drive to meet Moore's law as lithographic processes reach technological and cost limitations.

Block copolymer (BCP) lithography is emerging as a potential rival to conventional and short wavelength photolithography as a means to create nano-dimensioned substrate features, with a potential to reach sub 10 nm structures.

Reaching the sub-14nm node, the semiconductors industry is now ready to integrate block copolymers as lithographic masks, taking into account the extensive defect control that has been recently achieved in this technology.

Block copolymers is a promising platform to generate structures on the 10-100 nm scale, yielding highly organized structures having one-dimensional (1D) and two-dimensional (2D) patterns. Such small feature size requires strict control of the fabrication structures. The key for success in fabricating these structures lies on the existence of a robust, reliable and large-area nanometrology system.

It would be desirable to have a technique for identifying and analyzing the block copolymer self-assembly nanostructure without interfering with the nanostructure per se.

### SUMMARY OF THE INVENTION

In a first aspect, a method of converting an image of an array of nanostructures to a representation in a coordinate system is disclosed. The method may comprise identifying a plurality of line structures in the image and generating a network of coordinates for each line structure.

The image of the nanostructure may be perceived as an undirected supergraph where each 1D pattern may be perceived as a connected component of the graph. In graph theory, a connected component of an undirected graph is a subgraph in which any two vertices are connected to each other by paths, and which is connected to no additional vertices in the supergraph.

The advantage of this representation is that any analysis may be performed in the image representation and not directly in the image allowing for individual analysis of each connected component of the array of nanostructures. When the image contains nanostructures that present 1D properties such as line structures, then such a representation allows the applicability of a plurality of metrics on each network of coordinates and between the networks of coordinates of the line structures instead of on the original image. Thus, any analysis may be performed in parallel or in certain areas of the image. Furthermore any further analysis may require less memory storage and computational capacity to perform as any computations are performed on the image representation.

In some embodiments said identifying a plurality of line structures in the image may comprise generating a smoothed image of the image of the array of nanostructures; generating a black and white image from the smoothed image; and identifying the plurality of line structures in the black and white image.

The advantage of generating first a smoothed image is that any defects of the original image, such as shadows, may be smoothed out so that the analysis is homogenous in all parts of the image. The term "smoothed image" refers to an image that has had noise or other fine-scale structures removed through an approximation function that may capture only important patterns in the image. The smoothed image may be a grayscale image. In smoothing, the data points of an image are modified so individual points, presumably because of noise, are reduced, and points that are lower than the adjacent points are increased leading to a smoother image. The black and white conversion allows for better identification of the line structures. Such identification is also known as "labeling". Each line structure may be considered as a "label" and any network may be generated for each label of the black and white image.

In some embodiments said generating a network may comprise selecting a line structure from the plurality of line structures; selecting a first point in the selected line structure; storing the coordinates of the selected point; identifying a plurality of line substructures in the selected line structure, each of the line substructures not comprising the previously stored first point; selecting a plurality of points, each belonging to one of the plurality of line substructures; storing the coordinates of each of the plurality of selected points; and repeating said steps of identifying a plurality of line substructures, selecting a plurality of points and storing the coordinates of each of the plurality of points until no more line substructures can be identified.

By recursively identifying the points of the line structure, a precise representation of the line structure may be performed with a minimal amount of points. Furthermore, by storing the coordinates of the points, each line structure may be easily represented by a network of the selected points.

In some embodiments said selecting a first point may comprise identifying the most prominent point in the selected line structure. In a grayscale image, the most prominent point may be the darkest point, when the nanostructure lines are black, and the brightest point when the nanostructure lines are white. In general, the most prominent point is the point in the structure that exhibits an extreme low or high luminance compared with the rest of the points of the structure. The most prominent point of a line structure has a high probability of being towards the center of the line structure. As its identification is relatively easy, based on the comparative luminance of the points of the line structure, it may be used as a starting point for generating the network of coordinates.

In some embodiments said identifying the most prominent point may comprise identifying the selected line structure in the black and white image; generating a mask that includes only the selected line structure; applying the mask to the smoothed image; and identifying the most prominent point in the masked smoothed image. As the black and white image has no luminance information, it may be used as a starting point for identifying the line structure. Then, the rest of the image may be blanked-out and the black-and-white image of the selected line structure may be used as a mask to identify the line structure in the smoothed image. Since the smoothed image has brightness information included, it is possible to identify the most prominent point in the smoothed image and then return to the black-and-white image for further processing.

In some embodiments said identifying a plurality of line substructures may comprise defining a blank-out region around the selected first point; and identifying the plurality of line substructures outside the blank-out region. The blank-out region may include all previously stored points and therefore no points may be identified twice. This minimizes the point selection steps. The blank-out region may have the shape of a circle. This allows the blank-out region to be defined only by a number; its radius or its diameter.

In some embodiments the blank-out circular region may have a radius that is a multiple of a distance between line structures of the image. Having too small a region may generate a blank-out region that is not at least as wide as the line structure. As a consequence, the size of the blank-out region may be comparable to the resolution of the image or to the point that is to be identified. This could lead to unnecessary storage of points and it may lead to an erroneous identification of the directionality of the line structure. By selecting a radius that is at least a multiple of the distance between line structures, such an erroneous identification may be avoided and unnecessary storage of points is limited. A radius that is between 3 and 5 times the distance between line structures may be considered as an appropriate distance for minimizing errors and for optimizing the representation.

In some embodiments said selecting of a plurality of points may comprise identifying the contact points where the blank out region intersects with the identified selected subcomponents. This prevents that any point is selected twice and ensures that the selected point will be included in the subsequent blanked-out area that would have a radius larger than its previous one.

In some embodiments when repeating the steps of identifying a plurality of line substructures, selecting a plurality of points and storing the coordinates of each of the plurality of points, a step of generating a blank-out circular region that is centered at one of the selected points from the plurality of points for the connected substructure on which said point is located. This ensures that the previously stored points are not reintroduced in the algorithm. The aforementioned steps are then repeated until no more points remain to be selected for the identified line substructure. However, there may be a possibility that the identified connected subcomponent is connected with another identified subcomponent at a remote region of the image and outside the radius of the circle. Therefore, each identified subcomponent may be considered as an individual line substructure only locally with respect to the selected point. That means, when defining the next blank-out circular region, an area having a slightly bigger radius, about double the size of the original radius, may be considered to identify the connected subcomponent which is connected to the selected point. Whether or not the identified connected subcomponent may be connected to another connected subcomponent at a remote point outside this larger radius may not play a role in the identification algorithm.

In some embodiments the method may further comprise identifying a plurality of metrics related to the array of nanostructures. In case the array of nanostructures is not perfect, a plurality of fault values related to the array of nanostructures may be identified. For example, the number of branch points, turn points, lone points or end points may be identified in the line structures. The branch points may be indications of undesired bifurcations in the line structure. The turn points may generate errors in a lithography process. Accordingly, the lone points and end points may be considered as indications of imperfections in the structure.

In some embodiments said identifying a plurality of metrics may comprise identifying estimation values of lengths, widths, pitches or distances between identified selected components. This may provide indications as to the quality of the structure and may potentially allow the structure to qualify for certain applications.

In some embodiments the array of nanostructures may be a block copolymer structure.

In some embodiments the coordinate system may be a pixel coordinate system. Therefore, images of different size of arrays of nanostructures may be analyzed with appropriate resolution.

In another aspect, a method of measuring defectivity in an array of nanostructures is disclosed. The method may comprise converting the image of the array of nanostructures to a representation in a coordinate system, according to embodiments hereof, and comparing a reference defectivity metric with an identified metric related to the array of nanostructures during said conversion of the image in said coordinate system. When the identified metric does not satisfy a condition of the reference defectivity metric, then the array of nanostructures may be considered defective. This allows for easy identification of a defective nanostructure.

In another aspect, a device for converting an image of a nanostructure to a representation in a coordinate system is proposed. The device may comprise computing/electronic means for identifying a plurality of line structures in the image, and computing/electronic means for generating a network of coordinates for each line structure.

In yet another aspect an apparatus for measuring defectivity in an array of nanostructures is proposed. The apparatus may comprise a device for converting the image of the array of nanostructures to a representation in a coordinate system, according to previous aspects hereof, and computing/electronic means for comparing a reference defectivity metric with an identified metric related to the array of nanostructures during said conversion of the image in said coordinate system. When the identified metric does not satisfy a condition of the reference defectivity metric, then said computing/electronic means may be arranged to generate an indication that the array of nanostructures is considered defective.

In yet another aspect, a computing device comprising a memory and a processor is disclosed. The memory may store computer program instructions executable by the processor, said instructions comprising functionality to execute a method of converting an image of an array of nanostructures to a representation in a coordinate system according to previous aspects and embodiments hereof.

In yet another aspect, a computing device comprising a memory and a processor is disclosed. The memory may store computer program instructions executable by the processor. Said instructions may comprise functionality to execute a method of measuring defectivity in an array of nanostructures according to previous aspects and embodiments hereof.

In yet another aspect, a computer program product is proposed. The computer program product may comprise instructions to provoke that a computing device implements a method of converting an image of an array of nanostructures to a representation in a coordinate system according to previous aspects and embodiments hereof.

In yet another aspect, another computer program product is proposed. The computer program product may comprise instructions to provoke that a computing device implements a method of measuring defectivity in an array of nanostructures according to previous aspects and embodiments hereof.

The computer program products may be stored in recording media or carried by a carrier signal.

Additional objects, advantages and features of embodiments of the invention will become apparent to those skilled in the art upon examination of the description, or may be learned by practice of the invention.

### BRIEF DESCRIPTION OF THE DRAWINGS

Particular embodiments of the present invention will be described in the following by way of non-limiting examples, with reference to the appended drawings, in which:
Figure 1 shows an example scaled original image of an array of nanostructures;
Figure 2 shows a scaled smoothed image of the example original image;
Figure 3 shows a scaled black-and-white image of the example original image;
Figure 4 is a scaled image of an identified line structure;
Figure 5 shows the example of the line structure of Fig.4 in more detail;
Figure 6 shows the line structure of Fig. 5 where the darkest point has been identified;
Figure 7 shows the line structure of Fig. 5 where the first blanked-out area has been defined;
Figure 8 shows the line structure of Fig. 5 where the second blanked-out area has been defined;
Figure 9 shows the line structure of Fig. 5 where the third blanked-out area has been defined;
Figure 10 shows the line structure of Fig. 5 where the eighth blanked-out area has been defined;
Figure 11 shows the line structure of Fig. 5 where all blanked-out areas for the identified line structure have been defined;
Figure 12 shows a scaled image of the points of the line structure of Fig. 5 that have been selected for representing the line structure in a coordinate system;

### DETAILED DESCRIPTION OF EMBODIMENTS

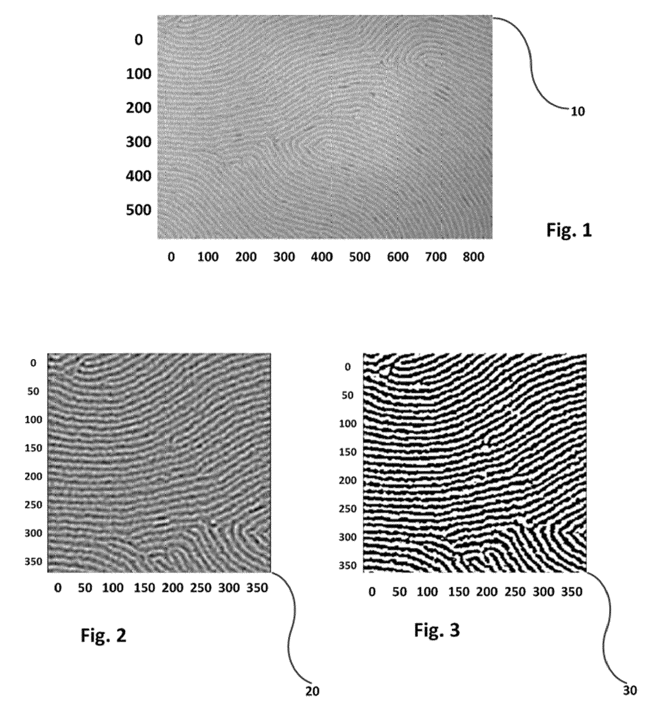

Figure 1 shows an example scaled Scan electron Microscopy (SEM) original image of an array of nanostructures. The array of nanostructures may be a block copolymer structure generated after a directed self-assembly (DSA) phase. DSA of block copolymers with a high degree of regularity on the 10-100nm scale may be introduced in high performance microelectronic applications at dimensions and densities typically inaccessible to traditional lithography methods. The image shows a snapshot of the block copolymer after the DSA phase. As may be seen from Fig. 1, the block copolymer comprises lines that appear wiggled and non-uniform in shape. The level of magnification of the picture is such that all the important features of the block copolymer may be identified with image analysis. The x and y axis denote pixels of the image window.

Figure 2 is a scaled and smoothed image of a section of the example original image of Fig. 1. A region of interest (RoI) has been selected for analysis. A convolution with a large area kernel has been applied to the original image so that any shading or other imperfection added by the image acquiring process may be minimised or smoothed out. However, luminance information is retained in the image.

Figure 3 is a scaled binary image (black-and-white) of the RoI of the example image. In the black-and-white image no luminance information remains. Therefore it is easier to identify line structures in the image and identify any imperfections in the self-assembled block copolymer structure. Starting from Fig. 3 a labelling process takes place. Connected-component labelling is used in image processing to detect connected regions in binary images. Through this process all connected components that would correspond ideally to lines in the copolymer structure of Fig. 1, may be identified. However, as the structure of Fig. 1 is not a perfect parallel line nanostructure, the process of labelling shall also include line structures that may comprise bifurcations, turns or lone points that may be undesirable and may lead to disqualification of a structure in certain applications, such as microelectronic applications. Although the process of labelling may identify all line structures it is not a process that may identify the defectivity of said components or of the overall structure. Thus a nanometrology algorithm is required to analyse the results of said labelling and a further defectivity identification algorithm to qualify or discard an array of nanostructures under study.

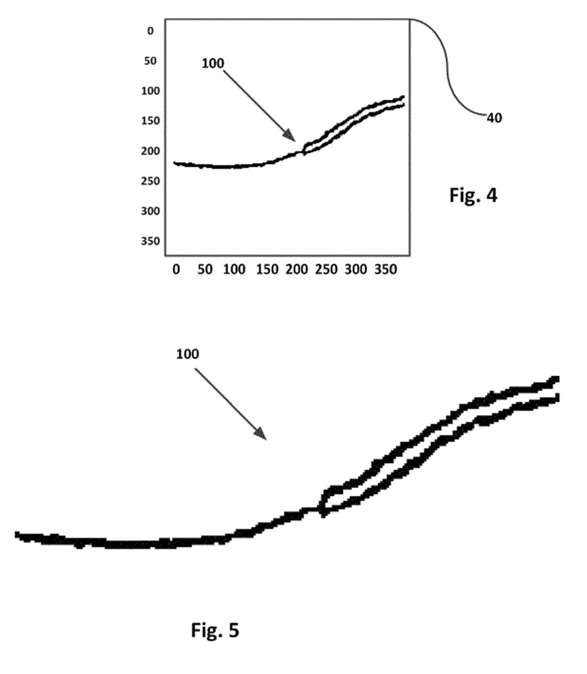

Fig. 4 shows the first step of the method after the labelling has been completed. In Fig. 4, a line structure 100 has been identified and the rest of the image 40 has been blanked out. In Fig. 5 said selected line structure 100 is shown in more detail. It may be seen that the selected line structure 100 contains a bifurcation that may be considered a defect in some applications. However, unless each line structure is identified and magnified, it would be impossible to identify such bifurcations without the use of a method, such as the method proposed herein. The purpose of the method is to convert each line structure to a representation in a coordinate system. In the example detailed herein, the coordinate system is a pixel coordinate system and the representation includes converting the line structure into a series of points whose coordinates shall be stored and further processed by the algorithm. Thus, a network of points may be generated for each line structure and, accordingly, for the whole of the RoI.

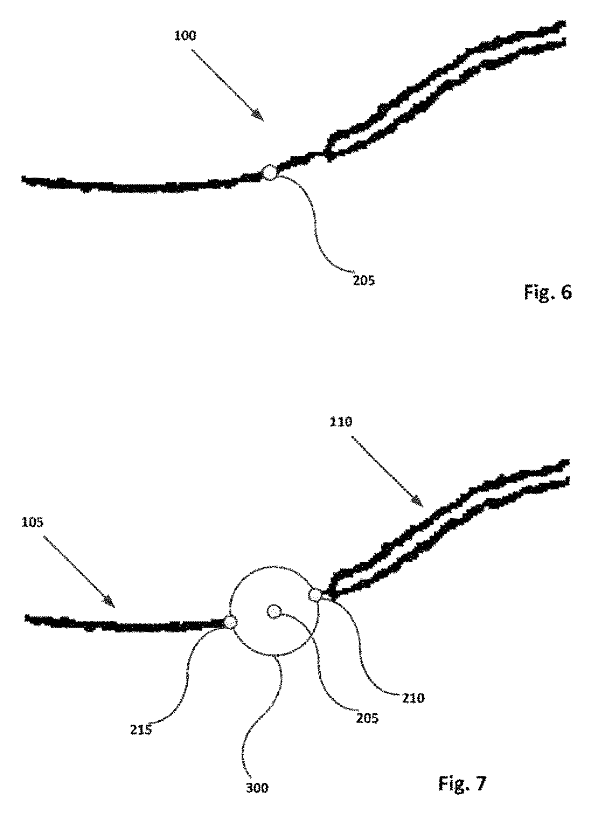

Fig. 6 shows the next step of the method which involves identifying a starting point 205 for the conversion of the line structure 100 to a series of points. The point 205 selected as a starting point in the example described herein is the darkest point as identified in the smoothed image. For that purpose, the image 40 of Fig. 4 is used as a mask that is used on top of the smoothed image 20 so that the identified selected component 100 may be identified in the smoothed image. As the smoothed image contains luminance information, it is possible to identify the darkest point. In the majority of the cases studied, the darkest point has been identified in the vicinity of the center of all line structures. It is therefore a good starting point for minimising the steps of the method and for maximising the effectiveness of the method. However, in theory, any point of the selected line structure may be used as a starting point.

After having selected the starting point 205, its coordinates in the pixel coordinate system are stored and a blank-out area 300 around said selected point 205 is defined. The blank out area shown in Fig. 7 is circular. This allows the definition of the blank-out area only by its radius. The radius may be any radius that allows a proper identification of the next points while minimising redundancy. At the same time the blank-out area should allow for identification of the direction of the line structure. Therefore, if the blank-out area is too small, that is, close to the width of the line structure, then it may be difficult to identify the direction of the line structure. On the other hand, if the blank-out area is too big then it may miss some defects, e.g. a turn, at some intermediate point. It has been estimated that a blank-out area that has a radius that is about 2 to 5 times the average distance between the line structures is optimal. As seen in Fig. 7, the blank-out circle dissects the line structure at two points, point 210 and point 215. Consequently, two connected sub-components are generated, connected sub-component 105 and line substructure 110. The coordinates of the two points 210 and 215 are further stored with the coordinates of point 205. Up to now, the bifurcation identified in Fig. 5 has not yet been identified by the method. However, even from these 3 points, it is already possible to discern the directionality of the line structure 100.

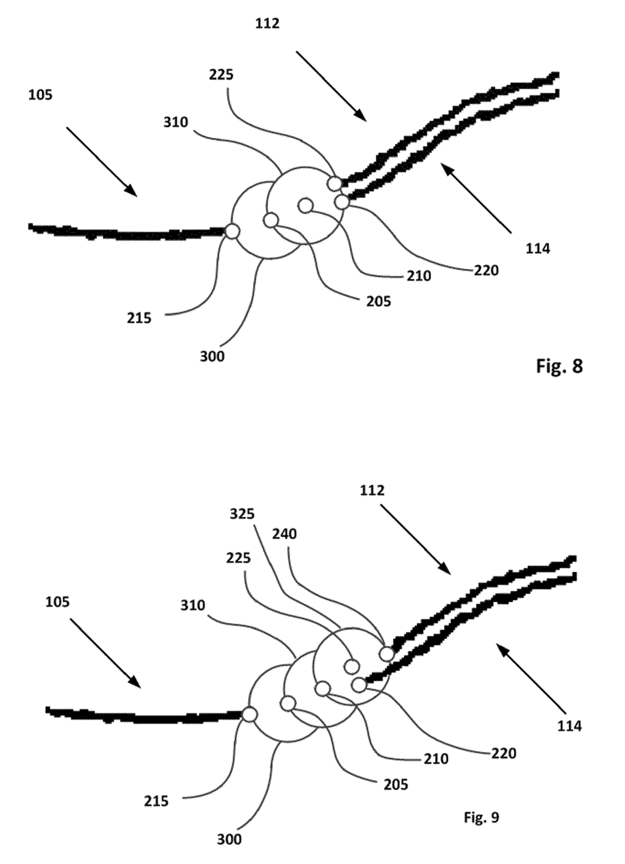

The next step of the method includes the step of selecting the blank-out area 310 which is centered at the previously identified point 210 as shown in Fig. 8. It can be seen from Fig. 8 that the blank-out area 310 dissects the connected sub-component 110 in two points, point 220 and point 225, thus forming two further connected sub-components 112 and 114. This is an indication of a fault in the line structure 100. It is further an indication of the presence of a bifurcation or branch point somewhere between the point 210 and the points 220,225.

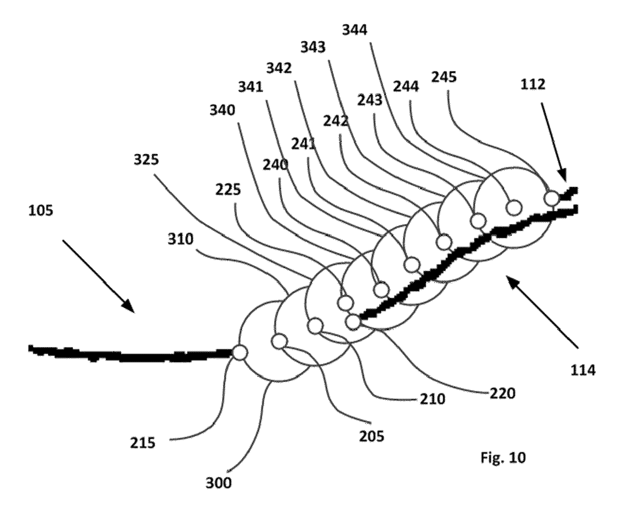

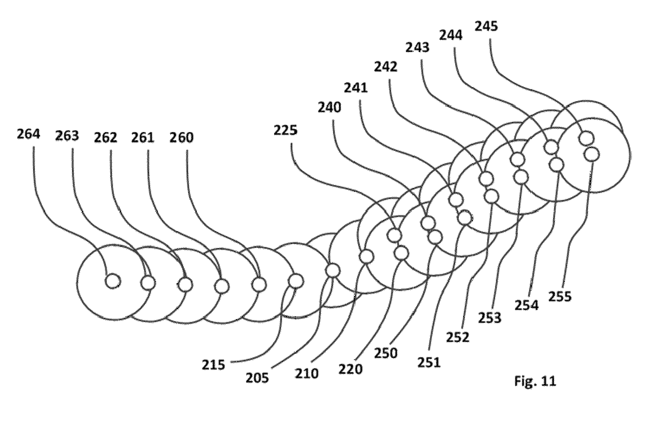

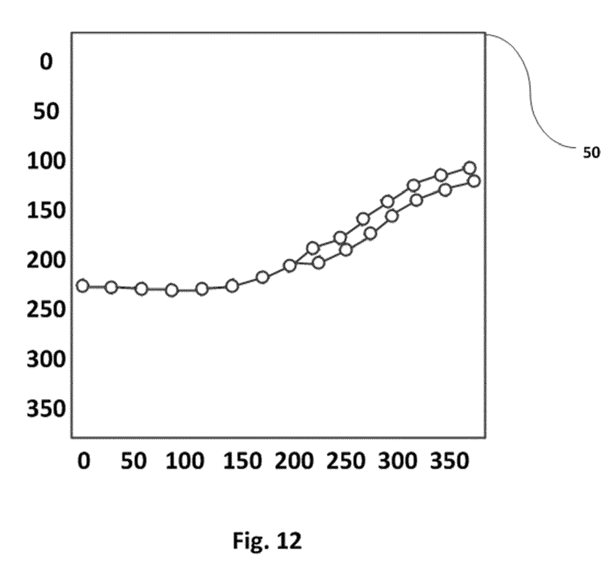

The method continues as shown in Fig. 9, where a blank-out area 325 is defined which is centered at the point 225 which is located at the subcomponent 112. The blank out area 325 is therefore only effective on the subcomponent 112 and does not affect the subcomponent 114. The blank out area dissects the sub-components 112 in point 240. The remaining points on the subcomponent 112 are defined by repeating the steps of the method detailed in Fig. 9. This is shown in Fig. 10, where blank out areas 340 to 344 and points 241 to 245 are successively defined. The next blank out region centered around point 245 will completely engulf the remainder of sub component 112. The point 245 is therefore identified as an end point of the line component. After the end point of component 112 is defined, the components 114 and 105 are treated in a similar way as shown in Fig. 11. This leads to the identification of points 250 to 255 on component 114 and points 260 to 264 on component 105. All identified points are stored together with information about their connection topology. By storing the coordinates of the identified points and the information on the connection between the points it is therefore possible to represent the line structure 100 only by a series of points, as may be seen in the image 50 of Fig. 12.

The process of converting the nanostructure image in a representation of points in a coordinate system continues for all line structures identified in the image. When all the line structures have been represented with points and the associated connection topology, then it is possible to analyse the image only based on its representation in points. A series of measurements and statistical calculations may be applied on the points and on the networks of the line structures to define, e.g., the quality of the array of nanostructures or their defectivity.

Such measurements of defects may be the number of faults found in the image. For example, the number of lone points, branch points, end points and turn points may be identified and measured. Lone points are defined as points that are not connected to any other points. In other words, lone points are degenerate line structures which only consist of one identified point. Branch points may be points where the nanostructure line splits and creates a bifurcation. Branch points are therefore identified as points with three or more connected points. Accordingly, end points are identified as points with only one neighbouring point, and appear toward the border of the image or when a line structure is disconnected. Finally, turn points may be points where the curvature of the line structure is such that the line structure may not qualify as a line according to the nanostructure specifications. The curvature at a point may be measured by considering a circle which intersects with this point and two of its neighbouring points. The curvature is then defined as the inverse of the radius of this circle.

The proposed method permits to characterize morphology in nanostructures including dimension, regularity, defects, etc., with possibility for statistical analysis. Furthermore, it allows to quantifying order in molecular nanostructures. As a nanometrology tool it may be suitable for a large range of dimensional scale down to nanometer scale and beyond. It may analyse multilayer and more complex structures as well as flat and more complex substrates.

The proposed method presents a number of advantages. It may analyse an array of nanostructures with no real size limitation apart from the resolution of the image acquiring devices, e.g. the SEM, which take the micrograph image. Furthermore, it is compatible with soft materials as no physical interaction with the actual nanomaterial takes place. Another advantage is that it allows analysis of large areas of nanostructures. Furthermore, it is suitable for cross sample comparison. A further advantage is that it is robust against image contrast and how images were taken because of the two-step conversion of the image, first to a convoluted/smoothed image and then to a black-and-white image, thus phasing out any features that could have been added by the image recording process. A further advantage is that, as the image is represented in a series of points, the technique is versatile for post processing. Furthermore, the analysis method itself is versatile and can be modified to fit end user needs and preferences. The analysis methodology has been developed exclusively to BCPs, therefore it has higher specificity. It allows for a lighter programming code, when implemented as a computer program, which leads to a faster analysis (minutes versus hours of programs that directly analyse images without conversion into points). Finally, it is compatible with semiconductor industry standards.

The proposed methodology may be implemented as a computer program. As input, the computer program may receive the image in the form of a file from an image acquiring device, such as a SEM. The original image may be visible in an interface of the computer program and the region of interest (RoI) to analyse may be chosen by the user. Then the computer program may comprise a module, such as a filtering function, to convert the RoI to a smoothed image and subsequently to a black and white image over which the software will implement the proposed methodology. Next, the computer program may convert the image to a representation in a coordinate system and display the results in a new window or tab. In this tab, the array of nanostructures, e.g. the BCP line structures, may be overlapped with the results of the representation. The user may now see, e.g. in one colour, how the lines are identified and have each defect signalized with a different colour: one colour for end points, another for lone points, another for branch points and another for turn points. Then, in a next window or tab, the statistical analysis networks may be plotted. These results may also be available as data files to be imported in any conventional scientific plotting program. Finally, in another tab, the user may see the pitch of the lines; this is where the spacing between the center of one line until a contiguous line is calculated. The results may be plotted on top of the image in two windows: the first may plot the pitch average to observe the correspondence to the real lines; the second may plot the standard deviation to the average pitch, indicating standard deviations below, e.g. 5% as a correct estimation, thus using one colour on those areas, and deviations above that percentage may be indicated as a poor estimation, using another colour.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

Further, although the embodiments of the invention described with reference to the drawings comprise computer apparatus and processes performed in computer apparatus, the invention also extends to computer programs, particularly computer programs on or in a carrier, adapted for putting the invention into practice. The program may be in the form of source code, object code, a code intermediate source and object code such as in partially compiled form, or in any other form suitable for use in the implementation of the processes according to the invention. The carrier may be any entity or device capable of carrying the program.

For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal, which may be conveyed via electrical or optical cable or by radio or other means.

When the program is embodied in a signal that may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

Furthermore, the invention can also be implemented through computer systems, such as personal computers, servers, a computer network of computers, laptops, tablets or any other programmable device or computer processor. Complementary or alternatively it can also be used programmable electronic devices, such as programmable logic controllers (ASICs, FPGAs, PLCs, etc..).

Therefore, the invention can be implemented both in hardware and in software or firmware, or any combination thereof.

## Claims

1. A method of converting an image of an array of nanostructures to a representation in a coordinate system, comprising:
identifying a plurality of line structures in the image;
generating a network of coordinates for each line structure.

2. The method according to claim 1, wherein said identifying a plurality of line structures in the image comprises:
generating a smoothed image of the image of the array of nanostructures;
generating a black and white image from the smoothed image;
identifying the plurality of line structures in the black and white image.

3. The method according to claim 2, wherein said generating a network comprises:
selecting a line structure from the plurality of line structures;
selecting a first point in the selected line structure;
storing the coordinates of the selected point;
identifying a plurality of line substructures in the selected line structure,
each of the line substructures not comprising the previously stored first point;
selecting a plurality of points, each belonging to one of the plurality of line substructures;
storing the coordinates of each of the plurality of selected points; and
repeating said steps of identifying a plurality of line substructures,
selecting a plurality of points and storing the coordinates of each of the plurality of points until no more line substructures can be identified.

4. The method according to claim 3, wherein said selecting a first point comprises identifying the most prominent point in the selected line structure.

5. The method according to claim 4, wherein said identifying the most prominent point comprises:
identifying the selected line structure in the black and white image;
generating a mask that includes only the selected line structure;
applying the mask to the smoothed image;
identifying the most prominent point in the masked smoothed image.

6. The method according to any of claims 3 to 5, wherein said identifying a plurality of line substructures comprises:
defining a blank-out region around the selected first point;
identifying the plurality of line substructures outside the blank-out region.

7. The method according to claim 6, wherein the blank-out region has the shape of a circle.

8. The method according to claim 7, wherein the blank-out circular region has a radius that is a multiple of a distance between line structures of the image.

9. The method according to claim 8, wherein said selecting a plurality of points comprises identifying the contact points where the blank out region intersects with the identified selected substructures.

10. The method according to claim 9, wherein said step of repeating said steps of identifying a plurality of line substructures, selecting a plurality of points and storing the coordinates of each of the plurality of points, further comprises the step of generating a blank-out circular region that is centered at one of the selected points from the plurality of points for the connected substructure on which said point is located.

11. The method according to any of the above claims, further comprising identifying a plurality of metrics related to the array of nanostructures.

12. The method according to any of the above claims, wherein the array of nanostructures is a block copolymer structure.

13. A method of measuring defectivity in an array of nanostructures, comprising:
converting the image of the array of nanostructures to a representation in a coordinate system, according to any of claims 1 to 12;
comparing a reference defectivity metric with an identified metric related to the nanostructure during said conversion of the image into said coordinate system;
wherein, when the identified metric does not satisfy a condition or a threshold of the reference defectivity metric, then the array of nanostructures is considered defective.

14. A device for converting an image of an array of nanostructures to a representation in a coordinate system, comprising:
computing/electronic means for identifying a plurality of line structures in the image;
computing/electronic means for generating a network of coordinates for each line structure.

15. An apparatus for measuring defectivity in an array of nanostructures, comprising:
a device for converting the image of the array of nanostructures to a representation in a coordinate system, according to claim 14;
computing/electronic means for comparing a reference defectivity metric with an identified metric related to the nanostructure during said conversion of the image in said coordinate system;
wherein, when the identified metric does not satisfy a condition or threshold of the reference defectivity metric, then said computing/electronic means is arranged to generate an indication that the array of nanostructures is considered defective.
